# EUROPÄISCHE PATENTSCHRIFT

(11) **EP 0 444 248 B1**
(45) Veröffentlichungstag und Bekanntmachung des Hinweises auf die Patenterteilung: **08.09.1993**
(21) Anmeldenummer: 90122270.3
(22) Anmeldetag: 22.11.1990
(51) Int. Cl.: B29C 43/44, F16C 13/02

(54) **Walzenmantelwechselvorrichtung an einem Kalander**
Device for changeover of the jacket for a roller in a calender
Dispositif de remplacement d'enveloppe de cylindre dans une calandre

(30) Priorität: 13.02.1990 DE 4004286
(43) Veröffentlichungstag der Anmeldung: 04.09.1991
(73) Patentinhaber: HERMANN BERSTORFF Maschinenbau GmbH, D-30627 Hannover (Kleefeld) (DE)
(72) Erfinder: Wiener, Stefan, Dipl.-Ing., W-3000 Hannover 1 (DE)

(56) Entgegenhaltungen:
- EP-A- 0 065 936
- DE-A- 2 753 487
- DE-C- 3 506 423
- DE-C- 3 508 847
- FR-A- 930 131
- US-A- 1 873 710

## Beschreibung

Die Erfindung betrifft eine Walzenmantelwechselvorrichtung an einem Kalander gemäß dem Oberbegriff des Hauptanspruchs.

Aus der DE-PS 35 06 423 der Anmelderin ist eine Walzenmantelwechselvorrichtung an einem Kalander für die Herstellung von geprägten Folien aus thermoplastischen Kunststoffen oder für Profilstreifen aus Elastomeren bekannt. Der Kalander verfügt über zwei oder mehr in einem Ständer angeordnete Walzen, wobei wenigstens eine Walze über ihren Walzenkern einen abziehbaren, profilierten Mantel angeordnet hat.

Mit Hilfe des Walzenmantels lassen sich in die Kalanderprodukte individuelle Profile einprägen, weshalb aber bei einer Änderung der Profilgeometrie jeweils ein Wechsel des Walzenmantels notwendig ist. Da die Betreiber solcher Kalanderanlagen bei kleinen Losgrößen, wie etwa bei der Herstellung von Reifen für Sonderfahrzeuge, zu einem relativ häufigen Wechsel der Walzenmäntel gezwungen sind, besteht bei diesen natürlich der Wunsch, die Zeit für einen Wechselvorgang so kurz wie möglich zu halten.

Diesem Wunsch entsprechend, wurde mit der bekannten Walzenmantelwechselvorrichtung im wesentlich vorgeschlagen, einen Lagerkörper der Walze aus dem Kalanderständer herauszuziehen und durch den so entstandenen Freiraum den Walzenmantel durch den Kalanderständer hindurchziehend auszuwechseln.

Dazu wird zunächst mittels eines hydraulischen Niederhalters ein über den Kalanderständer hinausragender Walzenzapfen derart fixiert, daß das andere Walzenende nach dem Abziehen des Lagerkörpers nicht absinken kann. Anschließend wird ein Zentrierzylinder in die abzugsseitige Stirnseite des Walzenkerns eingefahren und mit Hilfe von Hydraulikzylindern der Lagerkörper von einem weiteren Walzenzapfen aus dem Kalanderständer gezogen. Der hydraulisch betätigbare Zentrierzylinder und die Hydraulikzylinder für den Lagerkörperabzug sind an einem Klapprahmen befestigt, der um ein am Kalanderständer angebrachtes Drehgelenk horizontal schwenkbar ist. Nach dem Abzug des Lagerkörpers und des Zentierzylinders wird eine Verriegelungseinrichtung gelöst und der Klapprahmen samt Lagerkörper von dem Kalanderrahmen abgeschwenkt. Anschließend wird der Walzenmantel durch die so entstandene Öffnung im Kalanderständer ausgewechselt, der Klapprahmen wieder angeschwenkt und verriegelt. Nach dem Einfahren des Zentrierzylinders in den Walzenkern wird der Lagerkörper wieder auf den Walzenzapfen und in den Kalanderständer gedrückt und der Niederhalter des anderen Walzenzapfens auf der anderen Seite des Kalanderständers angehoben.

Diese an sich sehr vorteilhafte Walzenmantelwechselvorrichtung hat aber den Nachteil, daß der abgezogene Lagerkörper während des Auswechselvorganges abgekühlt und einer temperaturabhängigen Schrumpfung unterliegt. Bei langdauernden Walzenmantelwechselvorgängen kommt es beim Wiederaufsetzen des Lagerkörpers auf den Walzenzapfen in der Praxis gelegentlich vor, daß sich der Lagerkörper nicht oder nur unter Einsatz zusätzlicher mechanischer Hilfsmittel in seine endgültige Position befördern läßt. Dies wird insbesondere wegen des von dem Betreiber einer solchen Anlage gewünschten schnellen und problemlosen Walzenmantelwechsels als nachteilig empfunden.

Es ist daher die Aufgabe der Erfindung, eine Walzenmantelwechselvorrichtung an einen Profilkalander derart weiterzubilden, daß ein schneller und auch bei einem langdauernden Walzenmantelwechselvorgang problemloser Walzenmantelwechsel möglich ist, und daß die Wechselvorrichtung einen sehr einfachen und kostengünstigen Aufbau hat.

Die Aufgabe wird durch die im kennzeichnenden Teil des ersten Patentanspruchs beschriebenen Merkmale gelöst. Vorteilhafte Weiterbildungen und Ausgestaltungen der Erfindung sind in den Unteransprüchen wiedergegeben.

Durch die Anordnung eines mehrteiligen Lagerkörpers im oder am Kalanderständer zur Aufnahme eines Walzenzapfen wird eine einfache und mit erheblich weniger Bauteilen als nach dem bisherigen Stand der Technik auskommende Möglichkeit vorgestellt, den Walzenmantel einer Kalanderwalze schnell und zuverlässig auszutauschen.

Nach dem Abziehen der Teillagerkörper von dem Walzenzapfen kann der Walzenmantel wie bisher hydraulisch vom Walzenkern durch den Kalanderständer hindurch heruntergedrückt werden. In der Zeit nach dem Abziehen des bisherigen und dem Aufschieben des neuen Walzenmantels können die Teillagerkörper in vorteilhafter Weise wieder an das Walzenlager angelegt werden, um so ein Auskühlen und die damit verbundene Abkühlungsschrupfung zu vermeiden. Zum Aufschieben des neuen Walzenmantels werden die Teillagerkörper wieder kurzzeitig vom Walzenzapfen weggefahren, um diesen sofort danach wieder durch Heranfahren zu stützen und zu lagern.

Zudem sind die Teillagerkörper mit Hilfe der Stelleinrichtungen derart an das Lager heranfahrbar, daß insbesondere während des Betriebes der Kalanderanlage ein fester spielfreier Lagersitz gewährleistet ist.

Die erheblich verringerte Anzahl der Bauteile für eine praktikable Walzenmantelwechselvorrichtung erlaubt eine kostengünstigere Herstellung sowie einen zuverlässigen und wartungsarmen Betrieb der Anlage. Zudem läßt sich durch die erfindungsgemäße Vorrichtung der Zeitaufwand für den gesamten Wechselvorgang des Profilwalzenmantels gegenüber bisher bekannten Vorrichtungen etwa halbieren.

Die Erfindung wird anhand der Zeichnung durch ein bevorzugtes Ausführungsbeispiel beschrieben.

Es zeigen:
- Fig. 1: einen Längsschnitt durch einen Profilkalander mit der Niederhaltevorrichtung und einem dreiteiligen Lagerkörper im Kalanderständer.
- Fig. 2: eine teilweise Frontansicht gemäß Pfeil A in Fig. 1 mit geschlossenem Lagerkörper.

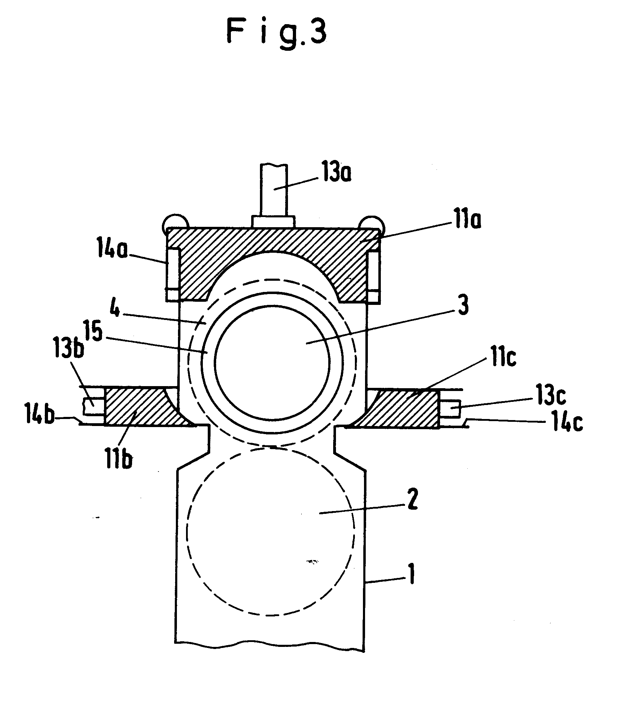

- Fig. 3: eine teilweise Frontansicht gemäß Pfeil A in Fig. 1 mit geöffnetem Lagerkörper.
- Fig. 4: eine teilweise Frontansicht gemäß Pfeil A in Fig. 1 mit geschlossenem zweiteiligen Lagerkörper.

In dem Kalanderständer 1 sind die Walzen 2 und 3 angeordnet. Die obere Walze 3 ist mit einem austauschbaren, profilierten Walzenmantel 4 versehen.

Der Walzenmantel 4 weist an einer Seite eine Ringnut 5 für ein darin einklinkbares Abschiebeblech 6 auf. Das Abschiebeblech 6 wird an Wellen 7 durch den Kalanderständer 1 geführt und ist mittels Hydraulikzylinder 8 verfahrbar ausgebildet.

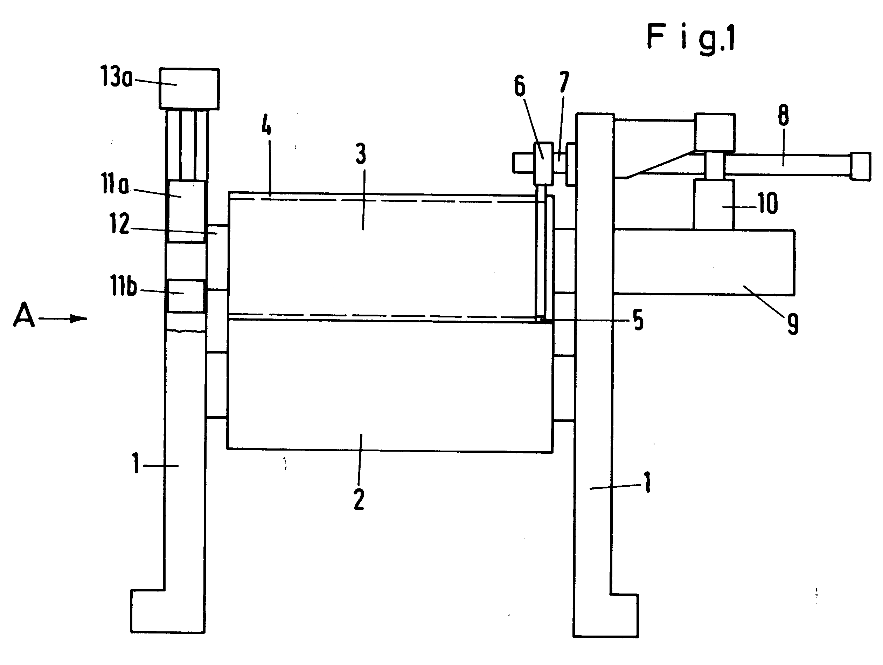

Auf dieser Seite des Kalanderständers 1 ist auch ein Niederhalter 10 befestigt, der auf einen durch den Ständer 1 hindurchragenden Walzenzapfen 9 auflegbar ist. Er dient dazu, nach dem Abzug des Lagerkörpers 11a, 11b, 11c und des Walzenmantels 4 den gegenüberliegenden, freischwebenden Zapfen 12 der Walze 3 in seiner Position zu halten (Fig. 1).

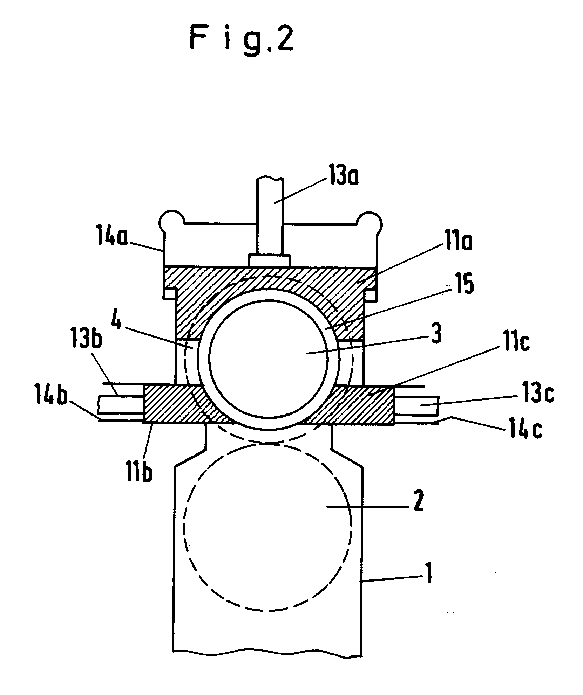

In Fig. 2 ist eine Teilansicht des Kalanderständers 1 aus der Blickrichtung A gemäß Fig. 1 dargestellt. Die obere, mit dem profilierten Walzenmantel 4 ausgestattete Walze 3 wird über ein Lager 15 und einen Lagerkörper im Ständer 1 gelagert und getragen. Der Lagerköprer besteht aus den drei Teillagerkörpern 11a, 11b, 11c, die mittels Stelleinrichtungen 13a, 13b, 13c in Führungen 14a, 14b, 14c im Kalanderständer 1 verfahrbar angeordnet sind. Die Teillagerkörper 11a, 11b, 11c umschließen ein Walzenlager 15 nicht vollständig, wenngleich ein völliges Umschließen durch den Gegenstand der Erfindung nicht ausgeschlossen wird. In dieser Position drücken die Teillagerkörper 11a, 11b, 11c derart auf das Lager 15, daß ein zuverlässiges spielfreies Lagern der Walze 3 gewährleistet ist.

Zum Auswechseln des Walzenmantels 4 wird der Teillagerkörper 11a in seiner Führung 14a vertikal nach oben und die Teillagerkörper 11b, 11c in ihren Führungen 14b, 14c horizontal zur Seite verfahren. Der dadurch frei werdende Raum im Kalanderständer 1 ermöglicht ein Abziehen des bisher genutzten und Aufziehen eines neuen Walzenmantels 4.

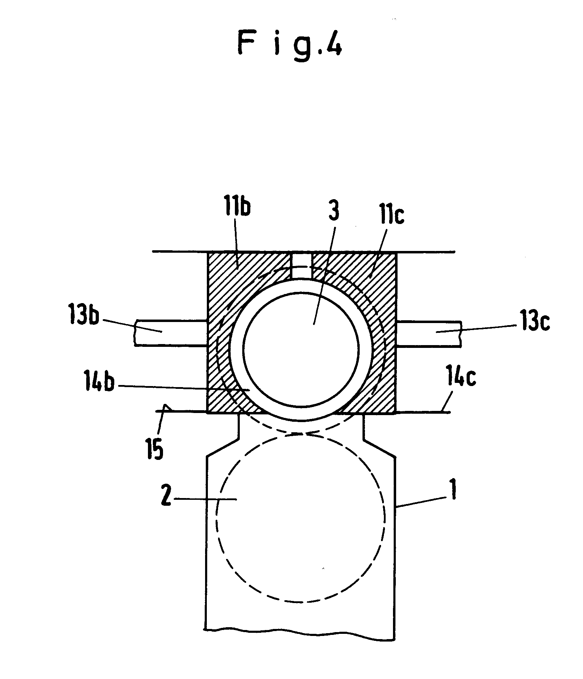

In einer weiteren Ausgestaltung der Erfindung sind die Teillagerkörper nicht im, sondern seitlich auf dem Kalanderrahmen angeordnet. Zudem besteht die Möglichkeit, die Lagerung das Walzenzapfens 12 auch durch einen zweiteiligen Lagerkörper zu realisieren, wobei die beiden Teillagerkörper jeweils rechts- bzw. linksseitig von der Stirnseite des Walzenzapfens 12 angeordnet und horizontal mittels Stelleinrichtungen in Führungen verfahrbar sind (Fig. 4).

Der Wechsel eines Walzenmantels 4 wird in der nachfolgend beschriebenen Reihenfolge vorgenommen, wobei zu erwähnen ist, daß der neue Walzenmantel in einer nicht gezeigten Aufwärmeinrichtung auf etwa die Arbeitstemperatur des Profilkalanders vorgewärmt wird.

Zunächst wird die Profilwalze mittels einer nicht dargestellten Verstelleinrichtung in eine Wechselposition verfahren. Dann wird der Niederhalter 10 hydraulisch auf den Walzenzapfen 9 gefahren, um zu verhindern, daß der gegenüberliegende Zapfen 12 nach Abzug der Teillagerkörper 11a, 11b, 11c absinkt.

Durch ein Betätigen der Stelleinrichtungen 13a, 13b, 13c werden die Teillagerkörper 11a, 11b, 11c auf ihren Führungen 14a, 14b, 14c von dem Lager 15 auf dem Walzenzapfen 12 abgezogen, so daß ein freier Raum für die Durchführung des Walzenmantels 4 durch den Kalanderständer 1 entsteht. Die Teillagerkörper sind in ihrer Ausfahrposition verriegelbar.

Anschließend wird eine nicht dargestellt Verriegelung des Walzenmantels 4 mit dem Kern der Walze 3 gelöst und der Walzenmantel 4 mit Hilfe des in die Ringnut 5 einfassenden Abschiebeblechs 6 und dem Hydraulikzylinder 8 vom Walzenkern heruntergedrückt.

Nachdem ein nichtgezeigtes Hebegeschirr den bisher verwendeten Walzenmantel übernommen hat, können bei einem länger dauernden Wechselvorgang die Teillagerköfper 11a, 11b, 11c wieder an das Walzenlager 15 angelegt werden. Dadurch wird eine von dem Auskühlen abhängige Schrumpfung der Teillagerkörper vermieden.

Der neue, vorgewärmte Profilwalzenmantel wird dann nach einem erneuten Abrücken der Teillagerkörper über den Walzenkern geschoben und verriegelt. Abschließend werden die Teillagerkörper wieder an das Lager 15 auf dem Walzenzapfen 12 herangefahren und ebenfalls in ihrer Endposition arretiert.

## Patentansprüche

1. Walzenmantelwechselvorrichtung an einem Kalander für die Herstellung von Profilstreifen aus Elastomeren oder von geprägten Folien aus thermoplastischen Kunststoffen mit zwei oder mehr in einem Ständer angeordneten Walzen (2,3), mit einem auf einem Walzenkern angeordneten, profilierten auswechselbaren Walzenmantel (4), mit einer Einrichtung zum Abziehen bzw. Aufziehen des Walzenmantels und mit einer Einrichtung (10) zum Niederhalten eines Walzenzapfens außerhalb des Kalanderständers,
**dadurch gekennzeichnet,**
daß auf der der Niederhalteeinrichtung (10) gegenüberliegenden Seite des Kalanderständers (1) ein Walzenzapfen (12) über ein Lager (15) in einem mehrteiligen Lagerkörper innerhalb des Kalanderständers (1) gelagert ist,
daß Teillagerkörper des Lagerkörpers mit Hilfe von Stelleinrichtungen von dem Lager (15) radial abziehbar sind, und
daß durch eine von den Teillagerkörpern freigegebene Ständeröffnung der Walzenmantel (4) von der Walze (3) abziehbar bzw. auf diese aufziehbar ist.

2. Walzenmantelwechselvorrichtung gemäß Anspruch 1,
**dadurch gekennzeichnet,**
daß der mehrteilige Lagerkörper aus drei Teillagerkörpern (11a, 11b, 11c) besteht, von denen der obere Teillagerkörper (11a) mit Hilfe der Stelleinrichtung (13a) vertikal und zwei untere Teilllagerkörper (11b, 11c) mit Hilfe der Stelleinrichtungen (13b, 13c) horizontal von dem Lager (15) auf dem Walzenzapfen (12) abziehbar sind.

3. Walzenmantelwechselvorrichtung gemäß Anspruch 1,
**dadurch gekennzeichnet,**
daß der Lagerkörper aus zwei Teillagerkörpern besteht, die jeweils rechts- bzw. linksseitig von der Stirnseite des Walzenzapfens (12) angeordnet und mittels Stelleinrichtungen von diesem abziehbar sind.

4. Walzenmantelwechselvorrichtung gemäß den Ansprüchen 1 bis 3,
**dadurch gekennzeichnet,**
daß die Teillagerkörper in Führungen (14a, 14b, 14c) verfahrbar sind.

5. Walzenmantelwechselvorrichtung gemäß den Ansprüchen 1 bis 4,
**dadurch gekennzeichnet,**
daß die Teillagerkörper in ihren Endpositionen verriegelbar sind.

6. Walzenmantelwechselvorrichtung gemäß den Ansprüchen 1 bis 5,
**dadurch gekennzeichnet,**
daß die Teillagerkörper außerhalb des Kalanderständers (1) den Walzenzapfen (12) lagern.

7. Walzenmantelwechselvorrichtung gemäß den Ansprüchen 1 bis 3,
**dadurch gekennzeichnet,**
daß die Stelleinrichtungen aus mechanischen Stellspindeln und/oder Kolben-Zylinder-Anordnungen bestehen.

## Claims

1. Roll shell changing device at a calender for the production of profile strips from elastomeric materials or embossed films from thermoplastic materials, with two or more rolls (2, 3) that are arranged in a support, one roll core being provided with an exchangeable profiled roll shell 4, with a device for stripping off and/or slipping on the roll shell, and with a device (10) for holding down a roll journal outside the calender support,
**characterized in that**
at the calender support (1), on the opposite side of the hold-down device (10), a roll journal (12) is supported by a bearing (15) with a multipart bearing element within the calender support (1),
that parts of the bearing element can be radially pulled off the bearing (15) by means of adjusting devices, and
that the roll shell (4) can be stripped off the roll (3) and/or slipped onto it through an aperture in the support that has been opened by the parts of the bearing element.

2. Roll shell changing device as per claim 1,
**characterized in that**
the multipart bearing element consists of three bearing element parts (11a, 11b, 11c), the top part of the bearing element (11a) allowing to be vertically and the two bottom parts of the bearing element (11b, 11c) horizontally pulled off the bearing (15) on the roll journal (12) by means of adjusting device (13a) and adjusting devices (13b, 13c), respectively.

3. Roll shell changing device as per claim 1,
**characterized in that**
the bearing element consists of two bearing element parts that are arranged to the right and to the left of the face of the roll journal (12), respectively, and can be pulled off the latter by means of adjusting devices.

4. Roll shell changing device as per claims 1 to 3,
**characterized in that**
the parts of the bearing element are displaceable in guides (14a, 14b, 14c).

5. Roll shell changing device as per claims 1 to 4,
**characterized in that**
the parts of the bearing element can be locked in their final positions.

6. Roll shell changing device as per claims 1 to 5,
**characterized in that**
the parts of the bearing element support the roll journal (12) outside the calender support (1).

7. Roll shell changing device as per claims 1 to 3,
**characterized in that**
the adjusting devices consist of mechanical adjusting spindles and/or piston-cylinder arrangements.

## Revendications

1. Appareil de changement de la chemise de cylindre monté sur une calandre pour la fabrication de bandes profilées en élastomère ou de feuilles grainées en thermoplastique pourvue d'un ou plusieurs cylindres (2, 3), une chemise de cylindre (4) profilée et échangeable étant montée sur un noyau de cylindre-avec un appareil servant à démonter ou bien à monter la chemise de cylindre et avec un appareil (10) pour presser un tourillon de cylindre se trouvant à l'extérieur du montant de la calandre,
**caractérisé**
en ce qu'un tourillon de cylindre (12) est logé dans le montant de la calandre au moyen d'un palier (15) à corps de palier en plusieurs parties sur le côté du montant de la calandre (1) opposé au presse-tourillon (10),
en ce que les éléments du corps de palier peuvent être retirés radialement du palier (15) au moyen de dispositifs d'ajustage et
en ce que la chemise de cylindre (4) peut être retirée du cylindre (3) ou bien poussée sur ce dernier à travers l'ouverture dans le montant dégagée par les éléments de corps de palier,

2. Appareil de changement de la chemise de cylindre selon revendication 1,
**caractérisé**
en ce que le corps de palier en plusieurs parties se compose de trois éléments de corps de palier (11a, 11b, 11c) dont l'élément de corps de palier supérieur (11a) est retiré verticalement au moyen du dispositif d'ajustage (13a) et deux éléments de corps de palier inférieurs (11b, 11c) sont retirés horizontalement du palier (15) sur le tourillon de cylindre (12) au moyen des dispositifs d'ajustage (13b, 13c).

3. Appareil de changement de la chemise de cylindre selon revendication 1,
**caractérisé**
en ce que le corps de palier se compose de deux éléments de corps de palier qui sont placés à droite ou bien à gauche de la face frontale du tourillon de cylindre (12) et qui peuvent être retirés de ce dernier au moyen de dispositifs d'ajustage.

4. Appareil de changement de la chemise de cylindre selon les revendications 1 à 3,
**caractérisé**
en ce que les éléments du corps de palier sont déplaçables dans des guidages (14a, 14b, 14c).

5. Appareil de changement de la chemise de cylindre selon les revendication 1 à 4,
**caractérisé**
en ce que les éléments du corps de palier peuvent être verrouillés dans leurs positions finales.

6. Appareil de changement de la chemise de cylindre selon les revendications 1 à 5,
**caractérisé**
en ce que les éléments du corps de palier supportent le tourillon de cylindre (12) à l'extérieur du montant de la calandre (1).

7. Appareil de changement de la chemise de cylindre selon les revendications 1 à 3,
**caractérisé**
en ce que les dispositifs d'ajustage se composent de broches de réglage mécaniques et/ou d'arrangements à piston/vérin.
